# FASCICULE DE BREVET EUROPEEN

(11) **EP 2 073 493 B1**
(45) Date de publication et mention de la délivrance du brevet: **26.11.2014**
(21) Numéro de dépôt: 08172022.9
(22) Date de dépôt: 17.12.2008
(51) Int. Cl.: H04L 29/06

(54) **Procédé de communication multimédia, serveur et produit programme d'ordinateur correspondants**
Multimedia-Kommunikationsverfahren sowie entsprechender Server und entsprechendes Computerprogramm
Multimedia communication method, corresponding server and computer program product

(30) Priorité: 21.12.2007 FR 0760319
(43) Date de publication de la demande: 24.06.2009
(73) Titulaire: Orange, 75015 Paris (FR)
(72) Inventeur: Gustin, Emmanuel, 22700, SAINT QUAY PERROS (FR); Bouvet, Bertrand, 22700, PERROS-GUIREC (FR)
(74) Mandataire: Bioret, Ludovic

(56) Documents cités:
- EP-A- 1 148 688
- US-A1- 2003 023 730

## Description

### 1. Domaine de l'invention

Le domaine de l'invention est celui des communications entre différents terminaux connectés à un même réseau de communication ou à des réseaux de communication différents. Plus précisément, l'invention concerne les communications de données multimédias, notamment audio et vidéo, entre au moins deux terminaux.

### 2. Art antérieur

Par flux multimédia, on entend dans tout ce qui suit un flux de données numériques comprenant plusieurs composantes qui peuvent être de nature sonore (audio), visuelle (texte, image, vidéo, etc.), haptique, olfactive ou gustative.

L'essor du haut débit dans les télécommunications et l'apparition sur le marché d'appareils téléphoniques multifonctions ayant des capacités de traitement de données multimédia, appelés par la suite terminaux de communication multimédias ont permis de proposer aux utilisateurs un certain nombre de services applicatifs, tels que l'accès web, l'envoi de messages vidéo, la messagerie instantanée et la visiophonie.

La visiophonie permet ainsi à deux utilisateurs équipés d'un terminal de communication multimédia (tel qu'un terminal de visiophonie, aussi appelé « visiophone ») de se voir pendant leur conversation téléphonique.

Un inconvénient provient du fait que bon nombre de terminaux de communication ont des capacités de traitement limitées à des données audio (terminaux audio). Il n'est donc pas possible pour leurs utilisateurs de recevoir des données vidéo du terminal de communication multimédia de leur interlocuteur, et donc de voir leur interlocuteur pendant une conversation téléphonique, ce qui peut engendrer des manques ou des frustrations aussi bien chez l'émetteur des images que chez celui qui ne peut recevoir les images.

Outre cette source d'insatisfaction pour les utilisateurs, un autre inconvénient réside dans le fait que la transmission de données vidéo qui se révèleront en définitive non utilisables sera inutilement coûteuse en ressources dans le terminal de communication multimédia (batterie, capacité de traitement) et dans le réseau de communication (traitement, bande passante des canaux de transmission).

Un inconvénient supplémentaire provient du fait que certains terminaux de communication multimédia (les terminaux de type GSM par exemple) comprennent deux boutons d'appel, à savoir un bouton d'appel en mode « visio » et un autre en mode « audio ». Dans le cas où un appel en mode « visio » est initié par l'utilisateur d'un tel terminal par activation du bouton d'appel correspondant et que le terminal de l'interlocuteur qu'il souhaite joindre est un terminal audio, l'appel ne pourra pas être établi. L'utilisateur du terminal de communication multimédia devra dans ce cas ré-initier un appel en mode « audio » par activation du bouton d'appel correspondant pour pouvoir joindre son interlocuteur. Ceci engendre des frustrations chez les utilisateurs et des pertes de temps.

EP 1 148 688 décrit une méthode et un appareillage relais permettant la communication entre terminaux de types différents.

### 3. Exposé de l'invention

L'invention propose une solution nouvelle qui ne présente pas l'ensemble de ces inconvénients de l'art antérieur, sous la forme d'un procédé de communication vers un terminal d'un utilisateur, incluant une étape de transmission d'un flux multimédia comprenant une composante d'un premier type et une composante d'un deuxième type.

Selon l'invention, un tel procédé comprend les étapes suivantes :
- détection d'une incapacité dudit terminal à traiter ladite composante du deuxième type ;
- séparation dudit flux multimédia en premier sous-flux portant la composante du premier type et un deuxième sous-flux portant la composante du deuxième type ;
- transmission dudit premier sous-flux vers ledit terminal ; et
- transmission dudit deuxième sous-flux vers un dispositif de restitution accessible audit utilisateur et apte à traiter un flux du deuxième type.

L'invention propose ainsi une solution nouvelle permettant de remédier à l'impossibilité pour un utilisateur équipé d'un terminal audio classique (deuxième utilisateur) de voir un interlocuteur équipé d'un terminal de communication multimédia (premier utilisateur) au cours d'une conversation téléphonique. En effet, l'invention permet au deuxième utilisateur de voir son interlocuteur sur un appareil tiers, ou dispositif de restitution (par exemple son ordinateur personnel connecté au réseau Internet) auquel il a accès tout en continuant de converser avec son interlocuteur par l'intermédiaire de son terminal audio.

Cette solution repose sur une séparation du flux multimédia transmis par le terminal de communication multimédia du premier utilisateur en deux sous-flux audio et vidéo, puis la transmission en parallèle de ces sous-flux respectivement vers le terminal audio du deuxième utilisateur et un dispositif de restitution apte à traiter le sous-flux vidéo auquel le deuxième utilisateur peut accéder.

Cette solution résout les problèmes d'incompatibilité entre les terminaux de communication multimédia et les terminaux audio classiques, et permet en conséquence d'éviter les manques d'information ou les frustrations des utilisateurs respectifs de ces terminaux.

Selon un mode de réalisation particulier de l'invention, l'étape de transmission dudit deuxième sous-flux est mise en oeuvre après une étape de détection d'une requête de transmission dudit deuxième sous-flux.

Ainsi, la transmission de sous-flux vidéo du terminal du premier utilisateur vers le dispositif de restitution n'est mise en oeuvre qu'après la génération par le premier ou deuxième utilisateur d'une requête de transmission sur l'un des terminaux ou sur le dispositif de restitution. Cette requête peut être générée par l'appui d'une touche intégrée au terminal du deuxième utilisateur ou au dispositif de restitution, par commande vocale, par un menu affiché sur un écran de visualisation, etc.

Selon un autre mode de réalisation particulier de l'invention, l'étape de transmission dudit deuxième sous-flux vers un dispositif de restitution comprend en outre les étapes suivantes :
- transmission dudit flux multimédia ou dudit deuxième sous-flux vers un noeud d'un réseau de communication accessible par ledit dispositif de restitution ;
- transmission dudit deuxième sous-flux dudit noeud vers ledit dispositif de restitution.

Ainsi, la transmission du sous-flux vidéo est prise en charge par un noeud d'un réseau de communication.

Selon encore un autre mode de réalisation de l'invention, le procédé de transmission comprend une étape d'authentification, délivrant une autorisation d'accès audit deuxième sous-flux pour ledit dispositif de restitution.

Ainsi, dans un souci de sécurité notamment, le procédé selon l'invention peut requérir l'authentification du deuxième utilisateur souhaitant accéder au sous-flux vidéo. Ceci évite en outre que des tiers accèdent à la vidéo par l'intermédiaire d'un autre terminal.

Par exemple, afin de s'authentifier pour accéder à la vidéo, le deuxième utilisateur doit fournir le numéro de téléphone du terminal audio par l'intermédiaire duquel il converse avec le premier utilisateur.

Selon un autre aspect de l'invention, ledit dispositif de restitution est apte à se connecter au réseau Internet et ledit procédé comprend une étape de connexion à un site sur lequel ledit deuxième sous-flux est accessible.

Ainsi, le procédé selon l'invention permet de diffuser le flux vidéo transmis par le premier utilisateur sur un site web ou sur un blog de manière à ce qu'il soit accessible au deuxième utilisateur par l'intermédiaire du dispositif de restitution connecté à Internet.

Selon encore un autre aspect de l'invention, l'étape de transmission dudit premier sous-flux et ladite étape de transmission dudit deuxième sous-flux sont mises en oeuvre dans un réseau IMS ou VoIP de type H.323.

Ainsi, bien qu'il soit possible que les sous-flux audio et vidéo soient transmis par l'intermédiaire de réseaux de communication différents, il est possible de transmettre ces sous-flux par l'intermédiaire du même réseau IMS ou VoIP de type H.323.

Selon un aspect particulier de l'invention, le dispositif de restitution est apte à transmettre un flux multimédia ou un sous-flux portant une composante du deuxième type.

Ainsi, le procédé selon l'invention permet également la transmission d'un flux multimédia du dispositif de restitution du deuxième utilisateur vers le terminal visiophonique du premier utilisateur. Il est possible par exemple que le dispositif de restitution soit équipé d'une caméra, dans quel cas l'invention permet la mise en oeuvre d'une session de visiophonie, au cours de laquelle les premier et deuxième utilisateurs pourront se voir pendant leur conversation.

L'invention concerne également un programme d'ordinateur téléchargeable depuis un réseau de communication et/ou enregistré sur un support lisible par ordinateur et/ou exécutable par un processeur, comprenant des instructions de code de programme pour la mise en oeuvre d'au moins certaines étapes du procédé de transmission décrit précédemment.

Finalement, l'invention concerne encore un serveur de communication vers un terminal d'un utilisateur, comprenant des moyens de transmission d'un flux multimédia comprenant une composante d'un premier type et une composante d'un deuxième type, le serveur comprenant :
- des moyens de détection d'une incapacité dudit terminal à traiter ladite composante du deuxième type;
- des moyens de séparation dudit flux multimédia en premier sous-flux portant la composante du premier type et un deuxième sous-flux portant la composante du deuxième type ;
- des moyens de transmission dudit premier sous-flux vers ledit terminal ; et
- des moyens de transmission dudit deuxième sous-flux vers un dispositif de restitution accessible audit utilisateur et apte à traiter un flux du deuxième type.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente un exemple de système dans lequel est mis en oeuvre le procédé de l'invention, selon un mode de réalisation particulier ;
- la figure 2 illustre les principales étapes du procédé selon un mode de réalisation de l'invention, dans un système tel que présenté en figure 1 ;
- les figures 3 à 5 représentent un chronogramme des échanges, respectivement entre le terminal de communication multimédia A, le terminal audio B et le dispositif de restitution C selon un mode de réalisation de l'invention, dans un système tel que présenté en figure 1 ;
- la figure 6 présente la structure simplifiée d'un serveur de communication, mettant en oeuvre un procédé de communication selon un mode de réalisation, dans un système tel que présenté en figure 1.

### 5. Description détaillée de l'invention

### 5.1 Principe général

Le principe général de l'invention repose sur la possibilité pour un utilisateur équipé d'un terminal de communication audio classique de voir son interlocuteur (ou des images transmises par cet interlocuteur) dans le cas où ce dernier souhaiterait lui transmettre des données vidéo à partir d'un terminal de communication multimédia.

Pour ce faire, l'invention propose de transmettre les données vidéo du terminal de communication multimédia vers un dispositif de restitution (apte à traiter des données vidéo) distinct, mais accessible par l'utilisateur équipé du terminal de communication audio.

Ainsi, il est possible pour l'utilisateur du terminal de communication audio de voir son interlocuteur pendant leur conversation téléphonique.

### 5.2 Description d'un mode de réalisation

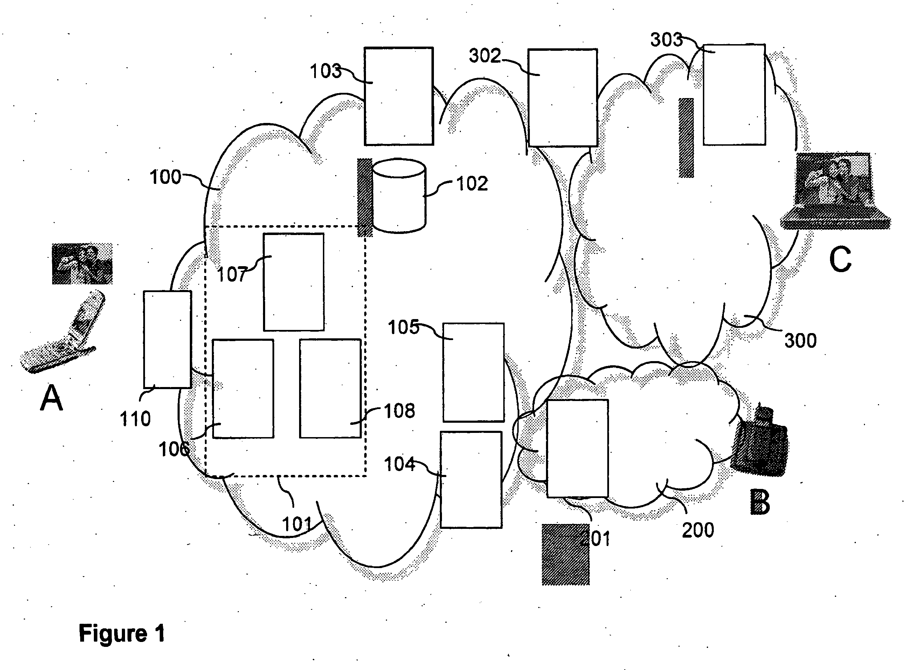

On présente, en relation avec la figure 1, un exemple de système dans lequel le procédé selon l'invention peut être mis en oeuvre.

Dans cet exemple, les composantes des premier et deuxième types d'un flux multimédia sont respectivement porteuses de stimuli audio et vidéo, mais peuvent dans d'autres applications être représentatives de stimuli destinés à d'autre sens que l'ouïe et la vue.

Le système comprend un premier terminal de communication qui possède des capacités de traitement de données multimédia. Dans ce mode de réalisation, le premier terminal de communication est un terminal de communication multimédia A d'un premier utilisateur, tel qu'un téléphone portable comprenant des moyens de visiophonie.

Le terminal de communication multimédia A comprend donc de manière classique un microphone, un haut-parleur, une caméra, un écran de visualisation, des moyens de traitement des données et des moyens de communication pour échanger, par l'intermédiaire d'une liaison sans fil (de type Wifi par exemple) des données avec un réseau de téléphonie sur IP doté d'une architecture classique de type IMS (IP Multimedia Subsystem), et que l'on appellera par la suite « réseau IMS » 100.

Usuellement, le réseau IMS 100 permet les communications multimédia et inter-fonctionne avec des réseaux de communication fixe, mobile ou sans fil. Les principaux éléments du réseau IMS 100 ont été représentées sur la figure 1. Une passerelle SBC (« Session Border Controller » en anglais, pour «Contrôleur de Session en Périphérique») 110 permet ainsi au réseau IMS 100 d'échanger des données avec le terminal de communication multimédia A. Un contrôleur de session CSCF (« Call Session Control Function » en anglais, pour « Fonction de Contrôle des Sessions d'Appel ») 101 est apte à traiter des requêtes transmises par le terminal de communication multimédia A. Classiquement, le contrôleur de session CSCF 101 se subdivise en fonction de serveur proxy P-CSCF (« Proxy Call Session Control Function » en anglais, pour « Fonction Proxy de Contrôle des Sessions d'Appel ») 106, en fonction d'interrogations I-CSCF (« Interrogating Call Session Control Function » en anglais, pour « Fonction d'Interrogations de Contrôle des Sessions d'Appel») 107 et en fonction de services S-CSCF (« Serving Call Session Control Function » en anglais, pour « Fonction de Services de Contrôle des Sessions d'Appel») 108.

Le réseau IMS 100 comprend aussi une base de données HSS (« Home Subscriber System » en anglais, pour «Base de Données Utilisateurs») 102 permettant de définir les différents utilisateurs abonnés au réseau (adresse IP de leur terminal de communication par exemple) et leurs droits d'accès aux services applicatifs (messagerie instantanée, messagerie vocale, visiophonie, etc.).

Les spécificités liées aux services applicatifs sont regroupées dans une infrastructure d'un ou plusieurs serveurs d'applications (« Application Servers » en anglais, pour «Serveurs d'Applications»), tel que le serveur d'application AS 103 hébergeant une application « visiophonie».

Une passerelle de données MGW (« Media Gateway » en anglais, pour «Passerelle de Média») 104 et une passerelle de mise en relation MGCF (« Media Gateway Control Function » en anglais, pour «Fonction de Contrôle à Passerelle de Média») 105 assurent l'interopérabilité du réseau IMS 100 avec un réseau de commutation de circuits, tel que le réseau RTC (Réseau Téléphonique Commuté) 200, qui n'est pas adapté pour la transmission de données vidéo mais seulement pour la transmission de données audio.

La passerelle SBC 110, le contrôleur de session CSCF 101, les passerelles MGW 104 et MGCF 105 ainsi qu'un commutateur RTC 201 forment ensemble un système de mise en relation du terminal de communication multimédia A et d'un deuxième terminal de communication du réseau RTC 200. Dans ce mode de réalisation, le deuxième terminal de communication est un terminal audio B d'un deuxième utilisateur qui peut être un téléphone fixe classique dont les capacités de traitement sont limitées à des données audio.

Les passerelles MGW 104 et MGCF 105 permettent la transformation de données audio du mode paquet en mode circuit (ou inversement) lors de la transmission de données audio du terminal de communication multimédia A vers le terminal audio B (ou l'inverse).

Le serveur d'application AS 103 relie le réseau IMS 100 au réseau Internet 300 auquel peut se connecter un dispositif de restitution C, qui est par exemple un ordinateur personnel. Le réseau Internet 300 comprend un serveur de streaming multimédia 302 (également appelé « serveur de diffusion multimédia ») et un serveur web 303 qui peut héberger un site web du premier utilisateur associé au terminal de communication multimédia A.

Le réseau IMS 100 utilise le protocole de signalisation SIP (« Session Initiation Protocol ») pour la transmission de demandes de mise en relation et d'acceptations de mise en relation entre le terminal de communication multimédia A et tout autre terminal de communication. Le protocole de signalisation SIP est standardisé par l'IETF (« Internet Engineering Task Force », organe de normalisation technique d'Internet). Tout autre protocole connu adapté au réseau IMS 100 peut également être utilisé.

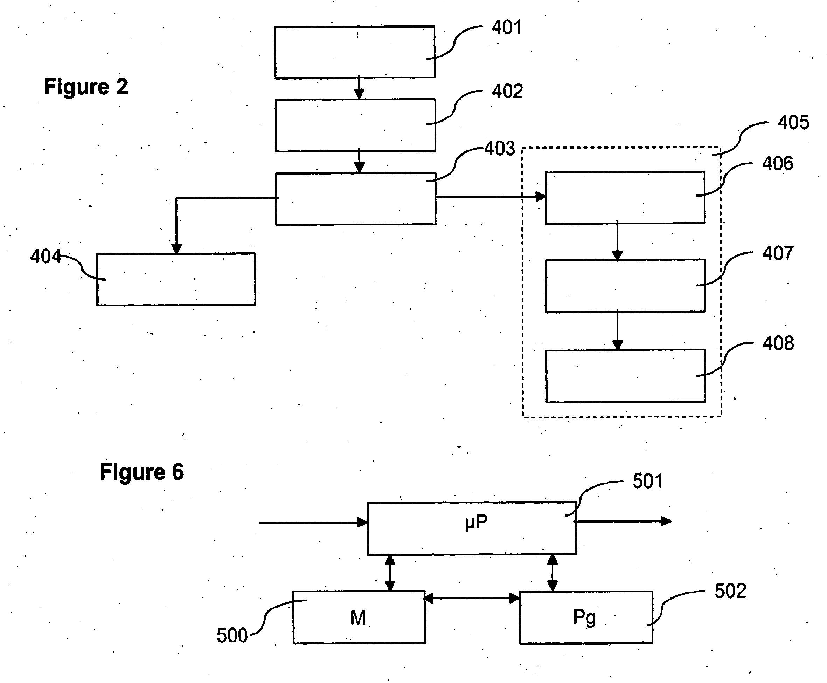

On présente maintenant, en relation avec la figure 2, les principales étapes du procédé selon un mode de réalisation de l'invention, dans un système tel que décrit précédemment (figure 1).

On suppose par la suite qu'un premier utilisateur du terminal de communication multimédia A est en cours de communication téléphonique avec le deuxième utilisateur du terminal audio B et souhaite que le deuxième utilisateur puisse aussi le voir. Le premier utilisateur peut alors activer une commande de transmission vidéo sur son terminal de communication multimédia A. Dans un mode de réalisation de l'invention, une étape préalable de détection d'une requête de transmission vidéo est mise en oeuvre (étape 401). Cette requête peut être transmise par l'intermédiaire d'une touche intégrée au terminal audio B ou au dispositif de restitution C, par commande vocale ou par un menu affiché sur un écran de visualisation.

Comme décrit précédemment, le terminal de communication multimédia A est apte à transmettre un flux multimédia comprenant une composante audio (voix du premier utilisateur transmise par le microphone du terminal de communication multimédia A) et une composante vidéo (vidéo du premier utilisateur capturée par la caméra du terminal de communication multimédia A). Selon l'invention, le procédé comprend une étape 402 de détection de la capacité du terminal audio B à traiter les composantes du flux multimédia que le terminal de communication multimédia A s'apprête à transmettre, en particulier la composante vidéo. Dans cet exemple, à l'étape 403, il est détecté que le terminal audio B n'est pas apte à traiter la composante vidéo du flux multimédia.

En conséquence, et conformément à l'invention, le flux multimédia est séparé en deux sous-flux, à savoir un sous-flux audio portant la composante audio (composante d'un premier type) et un sous-flux vidéo portant la composante vidéo (composante d'un deuxième type). Ainsi, le sous-flux audio est transmis vers le terminal audio B (étape 404), et le sous-flux vidéo est transmis vers le dispositif de restitution C qui est accessible au deuxième utilisateur (étape 405).

Dans le cas où le terminal du deuxième utilisateur est un cadre photo, on détectera à l'étape 403 l'incapacité du terminal du deuxième utilisateur à traiter la composante audio (composante du deuxième type dans ce cas), le cadre photo ne pouvant traiter que la composante vidéo (composante du premier type dans ce cas). La composante audio sera alors transmise vers un dispositif de restitution (téléphone classique, chaîne hi-fi, etc) accessible au deuxième utilisateur et apte à traiter un flux du deuxième type portant la composante audio.

Selon un mode de réalisation de l'invention, le sous-flux vidéo est transmis vers un noeud d'un réseau de communication accessible par le dispositif de restitution C (étape 406) et transmis du noeud du réseau vers le dispositif de restitution C (étape 408). Par exemple, le premier utilisateur peut communiquer au deuxième utilisateur l'adresse de son site web ou de son blog (hébergé sur un noeud du réseau Internet, par exemple le serveur web 303 de la figure 1) auquel le deuxième utilisateur pourra accéder, via le dispositif de restitution C, pour visionner la vidéo transmise par le terminal de communication multimédia A (étape 408). Ainsi, l'invention permet au deuxième utilisateur de converser avec le premier utilisateur (via le terminal audio B) mais aussi de le voir (via le dispositif de restitution C).

Selon un mode préférentiel de réalisation, et dans un souci de sécurité notamment, le dispositif de restitution C ne pourra accéder au sous-flux vidéo qu'après une étape d'authentification (étape 407) délivrant une autorisation d'accès au sous-flux vidéo. Ainsi, le deuxième utilisateur doit, pour accéder au sous-flux vidéo, saisir par exemple (par l'intermédiaire du dispositif de restitution C) un identifiant du terminal audio B, tel que le numéro de téléphone associé au terminal audio B. Ceci évite que des tiers accèdent à la vidéo par l'intermédiaire d'un autre terminal de communication.

Selon un autre mode de réalisation de l'invention (non représenté), le dispositif de restitution C peut être équipé d'une caméra de manière à ce que le premier utilisateur puisse aussi voir le deuxième utilisateur pendant leur conversation téléphonique.

Ainsi, le procédé de l'invention permet de remédier à l'impossibilité pour un utilisateur équipé d'un terminal audio classique (deuxième utilisateur) de voir un interlocuteur équipé d'un terminal de communication multimédia (premier utilisateur) au cours d'une conversation téléphonique. En effet, l'invention permet au deuxième utilisateur de voir son interlocuteur sur un appareil tiers, ou dispositif de restitution (par exemple son ordinateur personnel connecté au réseau Internet) auquel il a accès tout en continuant de converser avec son interlocuteur par l'intermédiaire de son terminal audio. Ceci permet d'éviter les manques d'information et les frustrations engendrés chez les utilisateurs respectifs dus à l'incompatibilité de leurs terminaux respectifs.

Il est évident que dans le cas où le terminal de communication B du deuxième utilisateur est apte à traiter la composante vidéo du flux multimédia, le flux multimédia comprenant une composante audio et une composante vidéo sera transmis du terminal de communication multimédia A vers le terminal de communication B.

Il est à noter que le principe de l'invention décrit ci-dessus est le même dans le cas où le premier utilisateur du terminal de communication multimédia A souhaiterait transmettre au deuxième utilisateur du terminal audio B :
- l'image vidéo capturée par la caméra du terminal de communication multimédia A (un lieu où se trouve le premier utilisateur par exemple) ;
- au moins une vidéo ou une photo enregistrée sur le terminal de communication multimédia A ;
- tout autre type de données multimédias.

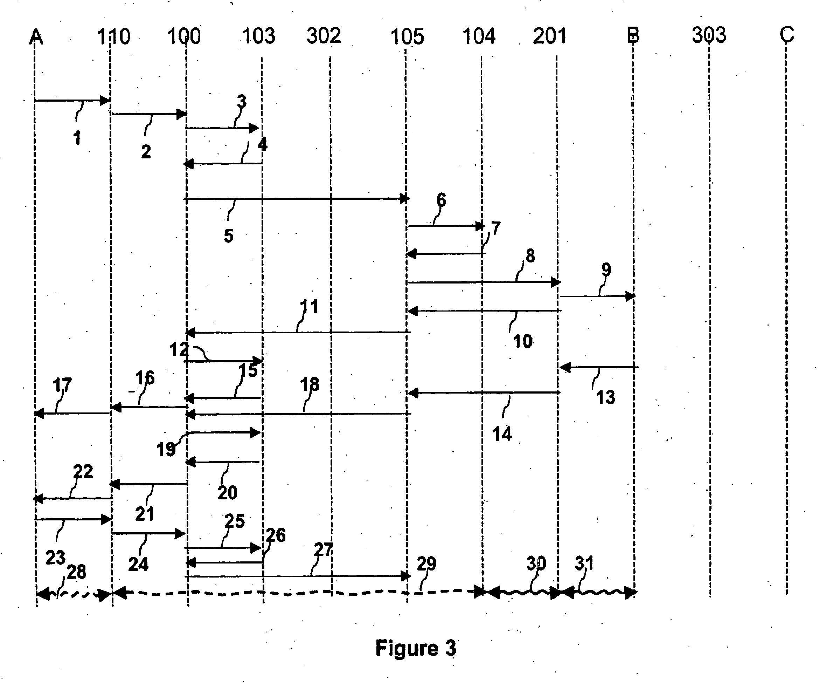

Les figures 3 à 5 représentent le chronogramme des échanges (étapes) entre le terminal de communication multimédia A, le terminal audio B et le dispositif de restitution C selon le mode de réalisation de la figure 1.

On se place dans le cas où le premier utilisateur du terminal de communication multimédia A a souscrit au préalable à un abonnement à un service de visiophonie sur le réseau IMS 100. Plus précisément, la souscription à un service de visiophonie comprend au préalable la création d'un filtre IFC (« Initial Filter Criteria » en anglais, pour Critère de Filtre Initial ») dans le profil du premier utilisateur qui est mémorisé dans la base de données HSS 102. Ainsi, les requêtes du terminal de communication multimédia A seront transférées automatiquement vers le serveur d'application AS 103 de visiophonie. Pour ce faire, l'adresse SIP « as.SeeWhatISeeOnTheWeb@orange-ftgroup.com » du serveur d'application AS 103 a été associée au filtre IFC. Des données supplémentaires ont été ajoutées dans le profil du premier utilisateur qui est mémorisé dans la base de données HSS 102 ou bien dans le serveur d'application AS 103. Ces données peuvent être un identifiant du terminal de communication multimédia A, tel que le numéro de téléphone, et un identifiant du site web (ou blog) sur lequel le premier utilisateur souhaite diffuser ses vidéos.

On se place ici dans le cas où le premier utilisateur du terminal de communication multimédia A souhaitant appeler le deuxième utilisateur sur son terminal audio B saisit le numéro de téléphone du terminal audio B. Il est à noter que le principe de l'invention tel que décrit ci-dessous serait le même dans le cas où le deuxième utilisateur du terminal audio B initiait l'appel vers le terminal de communication multimédia A du premier utilisateur. Comme illustré dans la figure 3, et conformément au protocole de signalisation SIP utilisé dans le réseau IMS 100, une requête d'établissement d'appel (ou de session) de type « INVITE » est transmise vers le serveur d'application AS 103 par l'intermédiaire de la passerelle SBC 110 et du réseau IMS 100 (étapes 1 à 3 de la figure 3) qui a alors déterminé que le premier utilisateur est abonné au service de visiophonie du serveur d'application AS 103. Comme mentionné précédemment, l'adresse SIP du serveur d'application AS 103 est mémorisée dans le filtre IFC de la base de données HSS 102. De manière classique, le message « INVITE » envoyé par le terminal de communication multimédia A contient une partie SDP (« Session Description Protocol » en anglais, pour «Protocole de Description de Session») décrivant les différents médias que supporte le terminal de communication multimédia A, à savoir l'audio et la vidéo (« SDP A Audio + Video »). Lorsque le SBC 110 reçoit le message « Invite ( SDP A Audio + Video ) du terminal de communication multimédia A (étape 1), le SBC 110 modifie l'adresse IP et le numéro de port RTP audio et vidéo présents dans le SDP par sa propre adresse IP et numéro de port RTP, puis transmet le message « Invite (SDP SBC Audio + Video) » au réseau IMS 100 (étape 2) qui lui le transmet au serveur d'application AS 103 (étape 3).

Le serveur d'application AS 103 mémorise dans un premier temps les numéros de téléphone respectifs des terminaux A et B, puis les capacités (c'est-à-dire les différents médias supportés) du terminal de communication multimédia A contenus dans la requête «INVITE » (étape 3). Le serveur d'application AS 103 transmet ensuite le message « INVITE SDP A Audio + Video » à la passerelle MGCF 105 par l'intermédiaire du réseau IMS (étapes 4 et 5). La passerelle MGCF 105 transmet un message de création de connexion « CRCX SDP SBC Audio » à la passerelle MGW 104 (étape 6) qui en retour lui transmet un message de réponse positive « 200 OK SDP MGW Audio » (étape 7). La passerelle MGCF 105 transmet alors un message « IAM » au commutateur RTC 201 (étape 8) qui envoie un message « Ringing (A) » au terminal audio B (étape 9) et un message « ACO » en retour à la passerelle MGCF 105 (étape 10). Aux étapes 11 et 12, un message de réponse « 180 Ringing » est transmis de la passerelle MGCF 105 au serveur d'application AS 103 par l'intermédiaire du réseau IMS 100. Le message de réponse « 180 Ringing » est ensuite transmis du serveur d'application AS 103 au terminal de communication multimédia A par l'intermédiaire respectivement du réseau IMS 100 et de la passerelle SBC 110 (étapes 15 à 17). Pendant ce temps, le terminal audio B transmet un message de décrochage « Off-Hook » au commutateur RTC 201 (étape 13) qui transmet un message de réponse « ANM » à la passerelle MGCF 105. La passerelle MGCF 105 transmet ensuite un message de réponse positive « 200 OK (SDP MGW Audio)» au serveur d'application AS 103 par l'intermédiaire du réseau IMS 100 (étapes 18 et 19).

Le serveur d'application 103 détecte sur la base de la partie « SDP MGW Audio » contenue dans le message de réponse positive « 200 OK » (étape 19) que le terminal audio B est en mode « repli » et peut seulement traiter des données audio. Cette étape de détection du mode « repli » peut également se faire à l'étape 12 dans le cas où le MGCF 105 retourne le contenu « SDP MGW Audio » dans le message « 180 Ringing ». Le serveur d'application 103 transmet alors le message de réponse positive « 200 OK (SDP MGW Audio)» au terminal de communication multimédia A par l'intermédiaire respectivement du réseau IMS 100 et de la passerelle SBC 110 (étapes 20 à 22). Un message de confirmation d'établissement de session « ACK » est transmis du terminal de communication multimédia A au serveur d'application AS 103 par l'intermédiaire de la passerelle SBC 110 et du réseau IMS 100 (étapes 23 à 25), puis du serveur d'application AS 103 à la passerelle MGCF 105 par l'intermédiaire du réseau IMS 100 (étapes 26 et 27).

Une session téléphonique est alors initiée entre le terminal de communication multimédia A et le terminal audio B permettant aux premier et deuxième utilisateurs de converser. Ainsi, des données audio en format « RTP » sont transmises du terminal A à la passerelle SBC 110 (étape 28) qui relaye ces données audio en format « RTP » à la passerelle de données MGW 104 (étape 29). La passerelle de données MGW 104 transmet ensuite les données audio en format « circuit » au commutateur RTC 201 (étape 30) qui transmet à son tour les données audio en format « analogique » (étape 31) au terminal audio B.

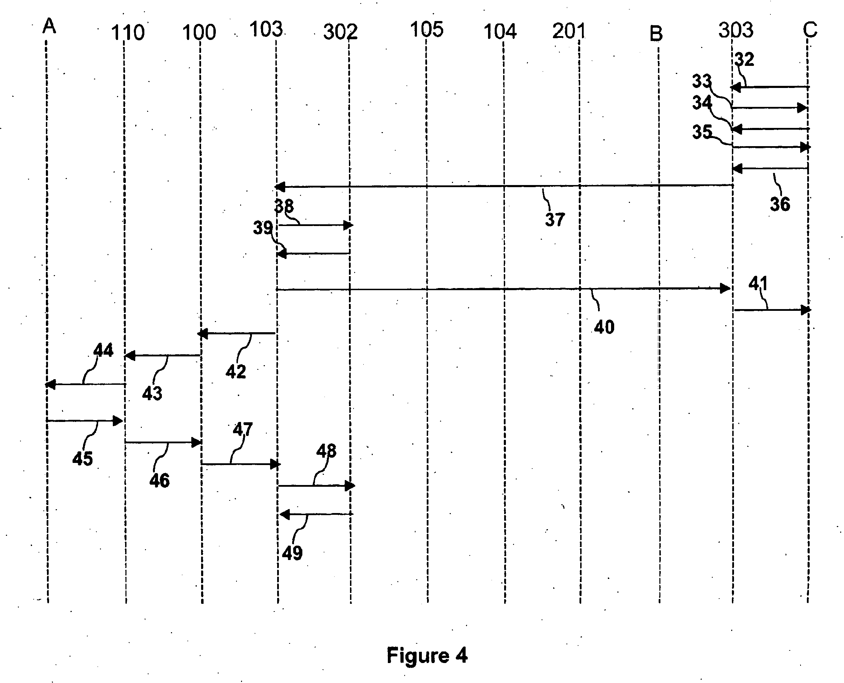

Comme illustré dans la figure 4, lorsque le premier utilisateur souhaite transmettre une vidéo au deuxième utilisateur, le premier utilisateur peut selon l'invention transmettre l'adresse URL de son site web ou blog (hébergé par le serveur web 303) au deuxième utilisateur lors de leur conversation téléphonique en cours (étapes 28 à 31 de la figure 3). Le deuxième utilisateur, qui a accès au dispositif de restitution C, se connecte par le biais du dispositif de restitution C au site web de manière classique. Ainsi, à l'étape 32 de la figure 4, une requête « HTTP GET (URL Site A Home Page) » est envoyée du dispositif de restitution C au serveur web 303 qui en réponse transmet un message de réponse « 200 OK» (étape 33).

Une fois le dispositif de restitution C connecté au site web, le deuxième utilisateur peut sélectionner dans un menu un service intitulé « SeeWhatISeeOnTheWeb ». Le dispositif de restitution C envoie alors une requête « HTTP GET (URL SeeWhatISeeOnTheWeb) » au serveur web (étape 34) qui renvoie un message de réponse « 200 OK (Authentification Page) » à l'étape 35. Une fenêtre d'authentification s'affiche alors sur l'interface de visualisation du dispositif de restitution C dans laquelle le deuxième utilisateur doit saisir le numéro de téléphone associé au terminal audio B, afin de pouvoir authentifier le dispositif de restitution C et accéder à la vidéo.

Une fois le numéro de téléphone du terminal audio B saisi et transmis au serveur web 303 sous la forme d'un message « HTTP GET (URL Authentification Page/authent=B number) » à l'étape 36, le serveur web 303 transmet une requête d'authentification au serveur d'application AS 103 comprenant un identifiant du site web (l'URL par exemple) et le numéro de téléphone du terminal audio B (sous la forme d'un message « Check Authent (URL identifiant, B number) de l'étape 37). Le serveur d'application AS 103 recherche alors dans la base de données HSS 102, ou dans sa propre base de données, le numéro de téléphone du terminal de communication multimédia A à partir de l'URL identifiant le terminal de communication multimédia A.

Une fois le numéro de téléphone du terminal de communication multimédia A reconnu, le serveur d'application AS 103 détermine, sur la base des numéros de téléphone des terminaux A et B, les informations liées à la session téléphonique en cours, en particulier les capacités des terminaux A et B. Ainsi, le serveur d'application AS 103 détermine que le terminal audio B n'est pas apte à traiter des données vidéo au contraire du terminal de communication multimédia A qui peut traiter des données audio et vidéo.

Le serveur d'application AS 103 transmet ensuite une requête de création d'une session vidéo au serveur de streaming multimédia 302 (requête « Create Context Video » à l'étape 38) qui lui renvoie un message de réponse positive « 200 OK (SDP Video Streaming Server - Recv Only, Identifiant vidéo à lire en streaming) » à l'étape 39.

Dans une variante de réalisation, le message de réponse positive renvoyé à l'étape 39 est un message s'écrivant par exemple « 200 OK (SDP Video Streaming Server - SendRecv, Identifiant vidéo à lire en streaming) », ce qui permet au terminal de communication multimédia A de recevoir également un flux vidéo généré par le serveur de streaming multimédia 302, le flux vidéo comprenant par exemple une publicité, une information indiquant au premier utilisateur l'état du deuxième utilisateur vis-à-vis de la vidéo transmise par le terminal de communication multimédia A (lecture de la vidéo en cours ou lecture de la vidéo non initiée par exemple), etc.

Le serveur d'application AS 103 transmet en retour cet identifiant vidéo à lire en streaming au serveur web 303 (message de réponse positive « 200 OK (Identifiant vidéo à lire en streaming) » à l'étape 40) et le serveur web 303 transmet à la réception de l'identifiant un message de réponse positive « 200 OK (Page Vidéo) » au dispositif de restitution C (étape 41). L'identifiant vidéo à lire en streaming permet ainsi à la page web générée par le serveur web 303 d'activer un lecteur de streaming (player vidéo) intégré dans la page web et de « jouer » automatiquement le flux vidéo identifié avec cet identifiant. En conséquence, le deuxième utilisateur n'a pas besoin de sélectionner le flux vidéo qu'il souhaite consulter.

Préalablement, le serveur d'application AS 103 active une procédure de modification du format d'encodage en cours mis en oeuvre par le terminal de communication multimédia A par le biais d'un message d'invitation « RE-INVITE (SDP Audio MGW + SDP Video Streaming Server - RecvOnly) » vers la passerelle SBC 110 dans lequel est inséré le SDP de la session audio en cours, correspondant au SDP de la passerelle MGW, et le SDP vidéo correspondant au SDP du serveur de streaming multimédia 302 (étapes 42 à 43). La passerelle SBC 110 modifie l'adresse IP et le numéro de port RTP audio et vidéo présents dans le SDP par sa propre adresse IP et numéro de port RTP et transmet ensuite au terminal de communication multimédia A un message d'invitation « RE-INVITE (SDP Audio SBC + SDP Video SBC - RecvOnly) » à l'étape 44.

Le terminal de communication multimédia A modifie son format d'encodage du flux multimédia et transmet au serveur d'application AS 103 un message de réponse positive « 200 OK (SDP A Audio + Video-SendOnly » (étape 45) comprenant le SDP vidéo associé au terminal de communication multimédia A (en mode émission) dans lequel la passerelle SBC 110 modifie l'adresse IP et le numéro de port RTP audio et vidéo présents dans le SDP par sa propre adresse IP et numéro de port RTP (message de réponse positive « 200 OK (SDP SBC Audio + Video-SendOnly » des étapes 46 et 47). Le serveur d'application AS 103 transmet au serveur de streaming multimédia 302 une requête comprenant le SDP vidéo de la passerelle SBC 110 associée au terminal de communication multimédia A (message d'autorisation « Authorise (SDP SBC Video-SendOnly » à l'étape 48), le serveur de streaming multimédia 302 envoyant en réponse un message de réponse positive « 200 OK » à l'étape 49.

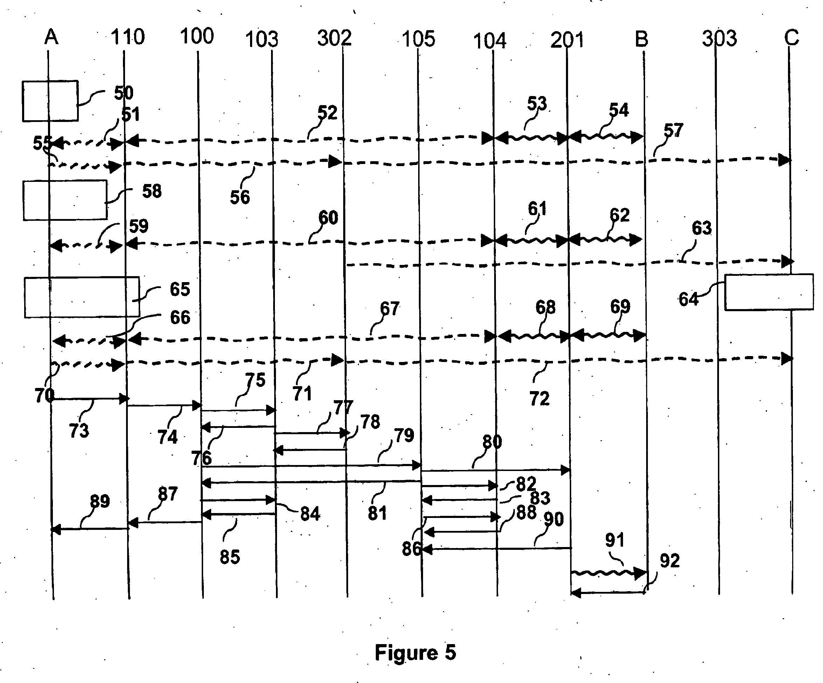

Comme illustré sur la figure 5, lorsque le premier utilisateur active la transmission de vidéo sur le terminal de communication multimédia A (étape 50), la vidéo est transmise du terminal de communication multimédia A à la passerelle SBC 110 en format RTP (étape 55) qui la transmet à son tour vers le serveur de streaming multimédia 302 en format RTP (étape 56), qui lui-même la transmet vers un lecteur de streaming (« Real », « QuickTime », « Windows Media », etc. (Marques respectivement déposées)) associé à la page web, à laquelle le deuxième utilisateur peut accéder par l'intermédiaire du dispositif de restitution C (étape 57) comme décrit ci-dessus. Simultanément la session audio peut toujours être en cours entre le terminal de communication multimédia A et le terminal audio B (les étapes 51 à 54 correspondant aux étapes 28 à 31 de la figure 3).

Lorsque le premier utilisateur désactive la vidéo sur le terminal de communication multimédia A (étape 58), le serveur de streaming multimédia 302 détecte qu'il ne reçoit plus de vidéo du terminal de communication multimédia A. Il peut alors arrêter toute transmission de données vers le site web ou bien transmettre une vidéo par défaut, une publicité par exemple (étape 63) à laquelle le dispositif de restitution pourra accéder (étape 64). Le serveur de streaming multimédia 302 peut aussi transmettre simultanément une vidéo ou d'autres types de données multimédias vers le terminal de communication multimédia A, à condition que la négociation SDP émise par le serveur de streaming multimédia 302 ait l'attribut « SendRcv » en lieu et place de « RcvOnly ». Pendant ce temps, la session audio peut toujours être en cours entre le terminal de communication multimédia A et le terminal audio B (les étapes 59 à 62 correspondant aux étapes 28 à 31 de la figure 3).

Si le premier utilisateur réactive la transmission de vidéo du terminal de communication multimédia A vers le dispositif de restitution C (étape 65), le serveur de streaming multimédia 302 détecte la réception de flux vidéo au format RTP en provenance du terminal de communication multimédia A via la passerelle SBC 110 (étapes 70 et 71), interrompt éventuellement la diffusion de publicité en cours et diffuse la vidéo sur le site web auquel le dispositif de restitution C est connecté (étape 72). Ce cas de figure ne nécessite aucune action du deuxième utilisateur associé au terminal audio B qui peut toujours être en conversation téléphonique avec le premier utilisateur du terminal de communication multimédia A (les étapes 66 à 69 correspondant aux étapes 28 à 31 de la figure 3).

Dans un autre cas de figure, lorsque le premier utilisateur réactive la transmission de vidéo sur le terminal de communication multimédia A (étape 65), la chronologie des étapes 32 à 49 décrites précédemment doit être reconduite.

Enfin, lorsqu'un des utilisateurs raccroche le terminal de communication multimédia A ou le terminal audio B, les transmissions des sous-flux audio et vidéo sont interrompues. Par exemple, dans le cas où le terminal de communication multimédia A est raccroché, un message de fin de session « BYE » est transmis du terminal de communication multimédia A vers le serveur d'application AS 103 par l'intermédiaire de la passerelle SBC 110 (étapes 73 à 75), le serveur d'application AS 103 le relayant ensuite vers la passerelle MGCF 105 (étape 79). Le serveur d'application AS 103 transmet aussi un message « Stop Video » au serveur de streaming multimédia 302 (étape 77) qui lui renvoie un message de réponse positive « 200 OK » (étape 78). Suite à l'étape 79, la passerelle MGCF 105 transmet un message « REL » au commutateur RTC 201 (étape 80) et un message « AUEP » à la passerelle de données MGW 104 (étape 82) qui lui renvoie un message de réponse positive « 200 OK » (étape 83). En retour, la passerelle MGCF 105 transmet un message « DLCX » à la passerelle de données MGW 104 (étape 86) qui lui renvoie un message de réponse positive « 250 OK » (étape 88). Ensuite, le commutateur RTC 201 envoie un message « RLC » à la passerelle MGCF 105 (étape 90).

Suite à l'étape 79, la passerelle MGCF 105 transmet également un message de réponse positive « 200 OK » au serveur d'application AS 103 par l'intermédiaire du réseau IMS 100 (étapes 81 et 84), le serveur d'application AS 103 relayant ce message au terminal de communication multimédia A par l'intermédiaire du réseau IMS 100 et de la passerelle SBC (étapes 85, 87 et 89). Le commutateur RTC 201 transmet alors une tonalité de fin de communication au terminal audio B (étape 91) qui lui renvoie un signal de raccrochage (étape 92).

### 5.3 Structure du serveur de communication

On présente finalement, en relation avec la figure 6, la structure simplifiée d'un serveur de communication, correspondant au serveur d'application AS 103, mettant en oeuvre un procédé de transmission selon le mode de réalisation particulier décrit ci-dessus.

Un tel serveur comprend une mémoire 500 constituée d'une mémoire tampon, une unité de traitement 501 équipée par exemple d'un microprocesseur µP, et pilotée par le programme d'ordinateur 502 mettant en oeuvre le procédé de communication selon l'invention.

A l'initialisation, les instructions de code du programme d'ordinateur 502 sont par exemple chargées dans une mémoire RAM avant d'être exécutées par le processeur de l'unité de traitement 501. L'unité de traitement 501 reçoit en entrée une requête de transmission d'un flux multimédia vers un terminal d'un utilisateur, le flux multimédia comprenant une composante d'un premier type et une composante d'un deuxième type. Le microprocesseur de l'unité de traitement 501 met en oeuvre les étapes du procédé de transmission selon les instructions du programme d'ordinateur 502, pour transmettre les composantes d'un premier et d'un deuxième type à l'utilisateur. Pour cela, le serveur comprend, outre la mémoire tampon 500, des moyens de détection d'une incapacité du terminal à traiter la composante du deuxième type, des moyens de séparation du flux multimédia en premier sous-flux portant la composante du premier type et un deuxième sous-flux portant la composante du deuxième type. Le serveur comprend en outre des moyens de transmission du premier sous-flux audio vers le terminal et des moyens de transmission du deuxième sous-flux vers un dispositif de restitution accessible à l'utilisateur et apte à traiter un flux du deuxième type. Ces moyens sont pilotés par le microprocesseur de l'unité de traitement 501.

### 5.4 Variantes

Dans une variante des modes de réalisation décrits précédemment, le terminal de communication multimédia A peut être un téléphone fixe apte à traiter des données multimédia. Le terminal audio B peut être un téléphone portable qui n'est pas apte à traiter des données vidéo. Le dispositif de restitution C peut être un poste de télévision, un ordinateur personnel, un ordinateur portable ou un assistant personnel de type PDA (en anglais « Personal Digital Assistant »), ou encore un cadre photo numérique.

Dans une autre variante, le réseau IMS peut n'être utilisé que pour transmettre le sous-flux vidéo du terminal de communication multimédia A vers le dispositif de restitution C. Le sous-flux audio peut être transmis simultanément entre le terminal de communication multimédia A et le terminal audio B par l'intermédiaire d'un réseau téléphonique tel que le réseau RTC ou un réseau radiotéléphonique (par exemple le réseau UMTS, GSM, etc). Dans ce cas, la séparation du flux multimédia en sous-flux audio et vidéo peut être effectuée dans le terminal de communication multimédia A.

Dans une autre variante, les sous-flux audio et vidéo peuvent être séparés par un dispositif intermédiaire situé entre le terminal multimédia A et le réseau IMS. Ce dispositif intermédiaire peut être un modem d'accès au réseau IMS tel que la Livebox (marque déposée).

Dans encore une autre variante, les sous-flux audio et vidéo sont transmis respectivement par le terminal de communication multimédia A vers le terminal audio B et le dispositif de restitution C par l'intermédiaire d'un réseau radiotéléphonique, tel que le réseau UMTS.

Dans une autre variante, le réseau IMS peut être un réseau VoIP (« Voice over IP » en anglais pour « Voix sur réseau IP » en français) de type H.323.

Dans une autre variante, l'établissement d'une session multimédia audio et vidéo peut être effectuée par une liaison full duplex dès l'établissement de la communication entre le terminal de communication multimédia A et le terminal audio B. Une vidéo, qui peut être sélectionnée par défaut (une publicité par exemple) ou par l'utilisateur du terminal de communication multimédia A par l'intermédiaire de l'Internet, peut être diffusé par le serveur de streaming multimédia 302 sur le terminal de communication multimédia A. Le serveur de streaming multimédia 302 reçoit lui une vidéo du terminal de communication multimédia A qu'il peut « poubelliser » ou bien stocker, cette vidéo restant accessible en temps différé. Lorsque l'utilisateur du terminal audio B aura accès au dispositif de restitution C, la vidéo pourra ainsi être transmise vers le dispositif de restitution C.

Dans une autre variante, la vidéo transmise par le terminal de communication multimédia A peut être visualisée par l'intermédiaire du dispositif de restitution C avec en sur-impression une publicité.

## Revendications

1. Procédé de communication vers un terminal d'un utilisateur, incluant une étape de transmission d'un flux multimédia comprenant une composante d'un premier type et une composante d'un deuxième type, **caractérisé en ce qu'**il comprend les étapes suivantes:
- transmission d'une requête d'établissement de connexion entre une unité émettrice et ledit terminal,
- détection et mémorisation d'une incapacité dudit terminal à traiter une composante du deuxième type ;
- établissement d'une session de communication entre ladite unité émettrice et ledit terminal, le terminal étant dans une situation dans laquelle il ne peut traiter que la composante de premier type,
- transmission d'un premier sous-flux portant la composante du premier type vers ledit terminal ;
- détection d'une requête de transmission à un dispositif de restitution accessible audit utilisateur et apte à traiter une composante de deuxième type, d'un deuxième sous-flux portant ladite composante de deuxième type,
- modification de la session de communication pour transmettre ledit deuxième sous-flux vers ledit dispositif de restitution parallèlement à l'étape de transmission dudit premier sous-flux vers ledit terminal.

2. Procédé de communication selon la revendication 1, **caractérisé en ce que** ladite étape de modification de la session de communication pour transmettre ledit deuxième sous-flux vers le dispositif de restitution comprend en outre les étapes suivantes :
- transmission dudit flux multimédia ou dudit deuxième sous-flux vers un noeud d'un réseau de communication accessible par ledit dispositif de restitution ;
- transmission dudit deuxième sous-flux dudit noeud vers ledit dispositif de restitution.

3. Procédé de communication selon l'une des revendications 1 à 2, **caractérisé en ce que** ledit dispositif de restitution est apte à se connecter au réseau Internet et **en ce que** ledit procédé comprend une étape de connexion à un site sur lequel ledit deuxième sous-flux est accessible.

4. Procédé de communication selon l'une des revendications 1 à 3, **caractérisé en ce que** ladite étape de transmission dudit premier sous-flux et ladite étape de transmission dudit deuxième sous-flux sont mises en oeuvre dans un réseau IMS ou VoIP de type H.323.

5. Procédé de communication selon l'une des revendications 1 à 4, **caractérisé en ce que** ledit dispositif de restitution est apte à transmettre un flux multimédia ou un sous-flux portant une composante du deuxième type .

6. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre des étapes suivantes:
- transmission par une unité émettrice d'une requête d'établissement de connexion entre cette unité émettrice et un terminal,
- détection et mémorisation d'une incapacité dudit terminal à traiter une composante du deuxième type ;
- établissement par ladite unité émettrice d'une session de communication entre cette unité émettrice et ledit terminal, le terminal étant en situation dans laquelle il ne peut traiter qu'une composante de premier type,
- transmission par ladite unité émettrice d'un premier sous-flux portant la composante du premier type vers ledit terminal ;
- détection d'une requête de transmission à un dispositif de restitution accessible audit utilisateur et apte à traiter une composante de deuxième type, d'un deuxième sous-flux portant ladite composante de deuxième type,
- modification de la session de communication, pour transmettre par ladite unité émettrice ledit deuxième sous-flux vers ledit dispositif de restitution parallèlement à l'étape de transmission dudit premier sous-flux vers ledit terminal.

7. Serveur de communication vers un terminal d'un utilisateur, comprenant des moyens de transmission d'un flux multimédia comprenant une composante d'un premier type et une composante d'un deuxième type, **caractérisé en ce qu'**il comprend :
- des moyens de transmission d'une requête d'établissement de connexion entre une unité émettrice et ledit terminal,
- des moyens de détection et de mémorisation d'une incapacité dudit terminal à traiter une composante du deuxième type ;
- des moyens d'établissement d'une session de communication entre ladite unité émettrice et ledit terminal, le terminal étant en situation dans laquelle il ne peut traiter que la composante de premier type,
- des moyens de transmission d'un premier sous-flux portant la première composante du premier type vers ledit terminal ;
- des moyens de détection d'une requête de transmission à un dispositif de restitution accessible audit utilisateur et apte à traiter une composante de deuxième type, d'un deuxième sous-flux portant ladite composante de deuxième type,
- des moyens de modification de la session de communication pour transmettre ledit deuxième sous-flux vers ledit dispositif de restitution parallèlement à l'étape de transmission dudit premier sous-flux vers ledit terminal.

## Patentansprüche

1. Verfahren zur Kommunikation zu einem Endgerät eines Benutzers, das einen Schritt der Übertragung eines eine Komponente eines ersten Typs und eine Komponente eines zweiten Typs enthaltenden Multimediastroms umfasst, **dadurch gekennzeichnet, dass** es die folgenden Schritte enthält:
- Übertragung einer Verbindungsaufbau-Anforderung zwischen einer Sendeeinheit und dem Endgerät,
- Erfassung und Speicherung einer Unfähigkeit des Endgeräts, eine Komponente des zweiten Typs zu verarbeiten;
- Aufbau einer Kommunikationssitzung zwischen der Sendeeinheit und dem Endgerät, wobei das Endgerät in einer Situation ist, in der es nur die Komponente ersten Typs verarbeiten kann,
- Übertragung eines die Komponente des ersten Typs enthaltenden ersten Teilstroms zum Endgerät;
- Erfassung einer Übertragungsanforderung an eine Wiedergabevorrichtung, die für den Benutzer zugänglich ist und eine Komponente zweiten Typs verarbeiten kann, eines die Komponente zweiten Typs enthaltenden zweiten Teilstroms,
- Änderung der Kommunikationssitzung, um parallel zum Schritt der Übertragung des ersten Teilstroms zum Endgerät den zweiten Teilstrom zur Wiedergabevorrichtung zu übertragen.

2. Kommunikationsverfahren nach Anspruch 1, **dadurch gekennzeichnet, dass** der Schritt der Änderung der Kommunikationssitzung, um den zweiten Teilstrom zur Wiedergabevorrichtung zu übertragen, außerdem die folgenden Schritte enthält:
- Übertragung des Multimediastroms oder des zweiten Teilstroms zu einem Knoten eines für die Wiedergabevorrichtung zugänglichen Kommunikationsnetzes;
- Übertragung des zweiten Teilstroms vom Knoten zur Wiedergabevorrichtung.

3. Kommunikationsverfahren nach einem der Ansprüche 1 bis 2, **dadurch gekennzeichnet, dass** die Wiedergabevorrichtung sich mit dem Internet verbinden kann, und dass das Verfahren einen Schritt der Verbindung mit einer Internetseite enthält, auf der der zweite Teilstrom zugänglich ist.

4. Kommunikationsverfahren nach einem der Ansprüche 1 bis 3, **dadurch gekennzeichnet, dass** der Schritt der Übertragung des ersten Teilstroms und der Schritt der Übertragung des zweiten Teilstroms in einem IMS- oder VoIP-Netz des Typs H.323 durchgeführt werden.

5. Kommunikationsverfahren nach einem der Ansprüche 1 bis 4, **dadurch gekennzeichnet, dass** die Wiedergabevorrichtung einen Multimediastrom oder einen eine Komponente des zweiten Typs tragenden Teilstrom übertragen kann.

6. Computerprogrammprodukt, das von einem Kommunikationsnetz herunterladbar und/oder auf einem computerlesbaren Träger gespeichert und/oder von einem Prozessor ausführbar ist, **dadurch gekennzeichnet, dass** es Programmcodeanweisungen zur Durchführung der folgenden Schritte enthält:
- Übertragung, durch eine Sendeeinheit, einer Verbindungsaufbau-Anforderung zwischen dieser Sendeeinheit und einem Endgerät,
- Erfassung und Speicherung einer Unfähigkeit des Endgeräts, eine Komponente des zweiten Typs zu verarbeiten;
- Aufbau, durch die Sendeeinheit, einer Kommunikationssitzung zwischen dieser Sendeeinheit und dem Endgerät, wobei das Endgerät in einer Situation ist, in der es nur eine Komponente ersten Typs verarbeiten kann,
- Übertragung, durch die Sendeeinheit, eines die Komponente des ersten Typs tragenden ersten Teilstroms zum Endgerät;
- Erfassung einer Übertragungsanforderung an eine Wiedergabevorrichtung, die für den Benutzer zugänglich und in der Lage ist, eine Komponente zweiten Typs zu verarbeiten, eines die Komponente zweiten Typs tragenden zweiten Teilstroms,
- Änderung der Kommunikationssitzung, um parallel zum Schritt der Übertragung des ersten Teilstroms zum Endgerät den zweiten Teilstrom durch die Sendeeinheit zur Wiedergabevorrichtung zu übertragen.

7. Kommunikationsserver zu einem Endgerät eines Benutzers, der Einrichtungen zur Übertragung eines eine Komponente eines ersten Typs und eine Komponente eines zweiten Typs enthaltenden Multimediastroms enthält, **dadurch gekennzeichnet, dass** er enthält:
- Einrichtungen zur Übertragung einer Verbindungsaufbau-Anforderung zwischen einer Sendeeinheit und dem Endgerät,
- Einrichtungen zur Erfassung und Speicherung einer Unfähigkeit des Endgeräts, eine Komponente des zweiten Typs zu verarbeiten;
- Einrichtungen zum Aufbau einer Kommunikationssitzung zwischen der Sendeeinheit und dem Endgerät, wobei das Endgerät sich in einer Situation befindet, in der es nur die Komponente ersten Typs verarbeiten kann,
- Einrichtungen zur Übertragung eines die erste Komponente tragenden ersten Teilstroms zum Endgerät;
- Einrichtungen zur Erfassung einer Übertragungsanforderung an eine Wiedergabevorrichtung, die für den Benutzer zugänglich ist und eine Komponente zweiten Typs verarbeiten kann, eines die Komponente zweiten Typs tragenden zweiten Teilstroms,
- Einrichtungen zur Änderung der Kommunikationssitzung, um parallel zum Schritt der Übertragung des ersten Teilstroms zum Endgerät den zweiten Teilstrom zur Wiedergabevorrichtung zu übertragen.

## Claims

1. Method for communicating to a terminal of a user, including a step of transmission of a multimedia stream comprising a component of a first type and a component of a second type, **characterized in that** it comprises the following steps:
- transmission of a request to set up a connection between an emitting unit and said terminal,
- detection and storage in a memory of an incapability of said terminal to process a component of the second type;
- set-up of a communication session between said emitting unit and said terminal, the terminal being in a situation in which it can only process the component of the first type,
- transmission of a first sub-stream carrying the component of the first type to said terminal;
- detection of a request for transmission to a restoring device accessible to said user and capable of processing a component of the second type, of a second sub-stream carrying said component of the second type,
- modification of the communication session to transmit said second sub-stream to said restoring device in parallel with the step of transmission of said first sub-stream to said terminal.

2. Communicating method according to Claim 1, **characterized in that** said step of modification of the communication session to transmit said second sub-stream to the restoring device furthermore comprises the following steps:
- transmission of said multimedia stream or of said second sub-stream to a node of a communication network accessible by said restoring device;
- transmission of said second sub-stream from said node to said restoring device.

3. Communicating method according to one of Claims 1 to 2, **characterized in that** said restoring device is capable of connecting to the Internet and **in that** said method comprises a step of connection to a site on which said second sub-stream is accessible.

4. Communicating method according to one of Claims 1 to 3, **characterized in that** said step of transmission of said first sub-stream and said step of transmission of said second sub-stream are implemented in an IMS or VoIP network of H.323 type.

5. Communicating method according to one of Claims 1 to 4, **characterized in that** said restoring device is capable of transmitting a multimedia stream or a sub-stream carrying a component of the second type.

6. Computer program product downloadable from a communication network and/or stored on a computer-readable storage medium and/or executable by a processor, **characterized in that** it comprises program code instructions for implementing the following steps:
- transmission by an emitting unit of a request to set up a connection between this emitting unit and a terminal,
- detection and storage in a memory of an incapability of said terminal to process a component of the second type;
- set-up by said emitting unit of a communication session between this emitting unit and said terminal, the terminal being in a situation in which it can only process a component of the first type,
- transmission by said emitting unit of a first sub-stream carrying the component of the first type to said terminal;
- detection of a request for transmission to a restoring device accessible to said user and capable of processing a component of the second type, of a second sub-stream carrying said component of the second type,
- modification of the communication session, to transmit by said emitting unit said second sub-stream to said restoring device in parallel with the step of transmission of said first sub-stream to said terminal.

7. Server for communicating to a terminal of a user, comprising means for transmitting a multimedia stream comprising a component of a first type and a component of a second type, **characterized in that** it comprises:
- means for transmitting a request to set up a connection between an emitting unit and said terminal,
- means for detecting and storing in a memory of an incapability of said terminal to process a component of the second type;
- means for setting up a communication session between said emitting unit and said terminal, the terminal being in a situation in which it can only process the component of the first type,
- means for transmitting a first sub-stream carrying the first component of the first type to said terminal;
- means for detecting a request for transmission to a restoring device accessible to said user and capable of processing a component of the second type, of a second sub-stream carrying said component of the second type,
- means for modifying the communication session to transmit said second sub-stream to said restoring device in parallel with the step of transmission of said first sub-stream to said terminal.
